# EUROPEAN PATENT SPECIFICATION

(11) **EP 3 382 558 B1**
(45) Date of publication and mention of the grant of the patent: **22.01.2020**
(21) Application number: 18155599.6
(22) Date of filing: 07.02.2018
(51) Int. Cl.: G06F 12/0864, G06F 12/126, G06F 13/16

(54) **APPARATUS, METHOD AND SYSTEM FOR JUST-IN-TIME CACHE ASSOCIATIVITY**
VORRICHTUNG, VERFAHREN UND SYSTEM FÜR RECHTZEITIGE CACHE-ASSOZIATIVITÄT
APPAREIL, PROCÉDÉ ET SYSTÈME D'ASSOCIATIVITÉ DE CACHE JUSTE À TEMPS

(30) Priority: 31.03.2017 US 201715476838
(43) Date of publication of application: 03.10.2018
(73) Proprietor: Intel Corporation, Santa Clara, CA 95054 (US)
(72) Inventor: TERAN, Elvira, Hillsboro, OR 97124 (US); CHISHTI, Zeshan A., Hillsboro, OR 97124 (US); WILKERSON, Christopher B., Portland, OR 97210 (US); WANG, Zhe, Hillsboro, OR 97124 (US)
(74) Representative: Rummler, Felix

(56) References cited:
- JP-A- H10 105 458
- US-A1- 2009 106 494
- US-A1- 2015 012 719
- US-B1- 6 446 168

## Description

### TECHNICAL FIELD

Embodiments described herein generally relate to an apparatus, method, and system for just-in-time cache associativity.

### BACKGROUND

Different cache algorithms may be used to determine where to place data in a faster cache device or first level memory that is directed to an address for a larger, typically, slower memory, such as a second level memory. A direct mapped cache algorithm applies a hash function to a portion of the address of the data to determine a unique location in the cache at which the data for that address is stored. When looking for read data for a read address in a direct mapped cache, the direct mapped cache location that may have the read data for the read address is known, and the cache algorithm has to make sure that the data for a different address other than the read address is not located in the direct mapped cache location, because multiple addresses from the larger second level memory device map to one address in the cache memory. If data for the read address is not at the direct mapped cache location, then there is a read miss and the data needs to be retrieved from the second level memory.

A set associative cache maps each address to a set of cache locations or blocks, such that the data for that address may be stored in any cache location in the set to which the address maps. When looking for a read address in the set to which the read address maps, all cache locations in the set need to be read to determine if they have data for the read address, by looking for the cache location in the set having a tag portion of the address matching the tag portion of the read address.

US 2015/012719 A1 discloses an apparatus for cache associativity according to the preamble of claim 1 and a method for cache associativity according to the preamble of claim 10.

The invention is set out in the appended set of claims. The dependent claims set out particular embodiments.

### BRIEF DESCRIPTION OF THE DRAWINGS

Embodiments are described by way of example, with reference to the accompanying drawings, which are not drawn to scale, in which like reference numerals refer to similar elements.
FIG. 1 illustrates an embodiment of a system having a two level memory used by a processor.
FIG. 2 illustrates an embodiment of an address as known in the prior art.
FIG. 3 illustrates an embodiment of content at a cache location in a cache memory.
FIG. 4 illustrates an embodiment of a remapping information entry.
FIG. 5 illustrates an embodiment of operations to add data to the first memory cache.
FIG. 6 illustrates an embodiment of operations to read data from the first memory cache.
FIG. 7 illustrates an embodiment of a system in which the memory device of FIGs. 1 may be deployed.

### DESCRIPTION OF EMBODIMENTS

A processor main memory may comprise two levels of memory, including a faster access first level smaller memory, such as a Dynamic Random Access Memory (DRAM) system, that caches data for a second level larger and slower memory. The second level memory is presented to the host and operating system as the main memory while the first level memory functions as the cache and is transparent to the operating system. The management of the two level memory (2LM) may be performed by a 2LM engine in the processor of the host.

A two level main memory includes two levels of memory, including a faster access first level smaller volatile memory, such as a Dynamic Random Access Memory (DRAM) system, that caches data for a second level larger and slower or byte addressable write-in place non-volatile memory. The first level memory may be referred to as a near memory or cache memory and the second level memory may be referred to as a far memory or non-volatile memory.

### BRIEF DESCRIPTION OF THE DRAWINGS

Embodiments are described by way of example, with reference to the accompanying drawings, which are not drawn to scale, in which like reference numerals refer to similar elements.

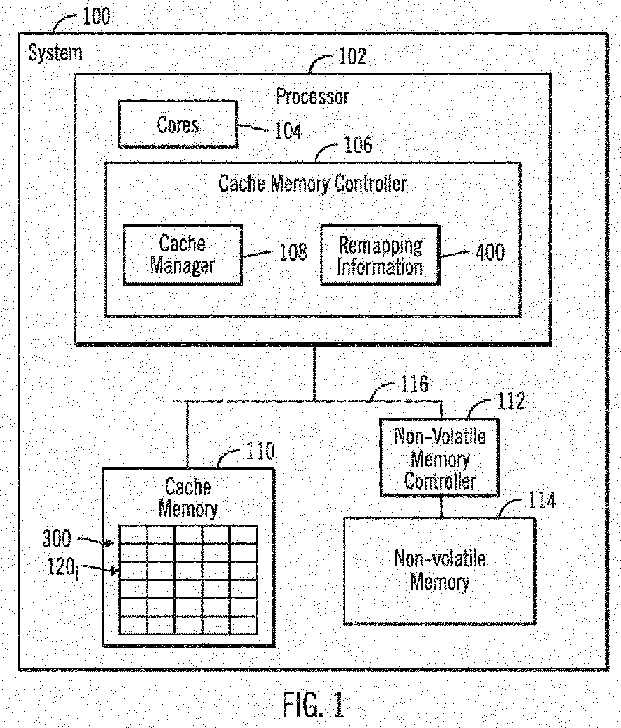

FIG. 1 illustrates an embodiment of a system having a two level memory used by a processor.

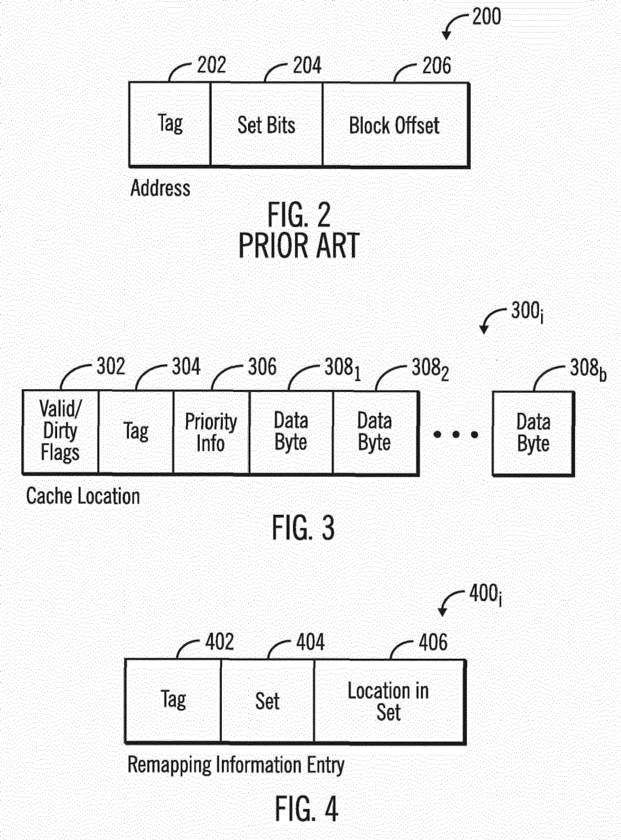

FIG. 2 illustrates an embodiment of an address as known in the prior art.
FIG. 3 illustrates an embodiment of content at a cache location in a cache memory.
FIG. 4 illustrates an embodiment of a remapping information entry.

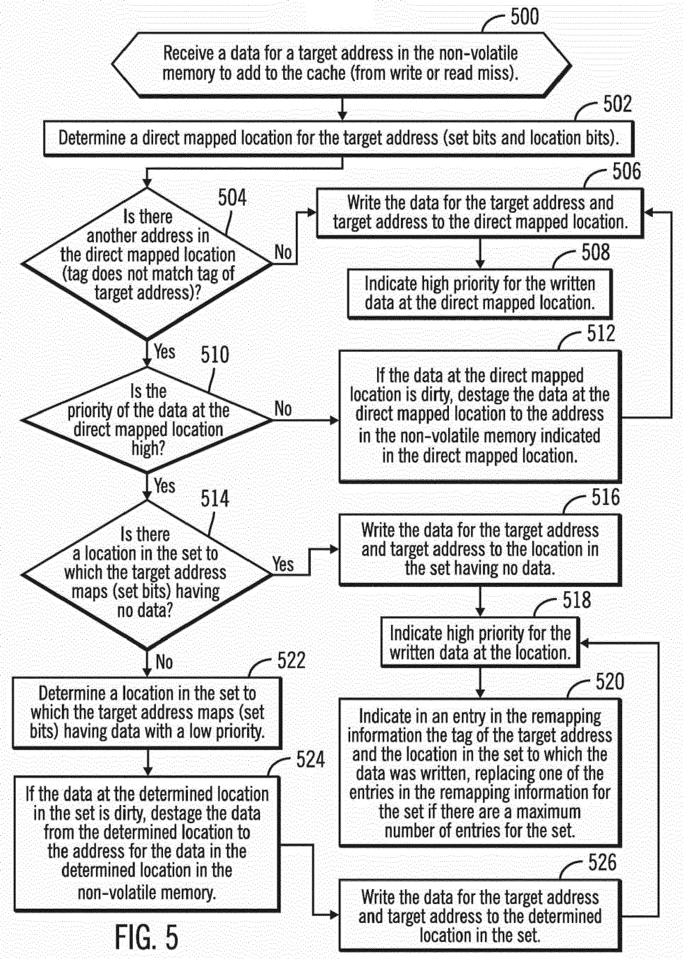

FIG. 5 illustrates an embodiment of operations to add data to the first memory cache.

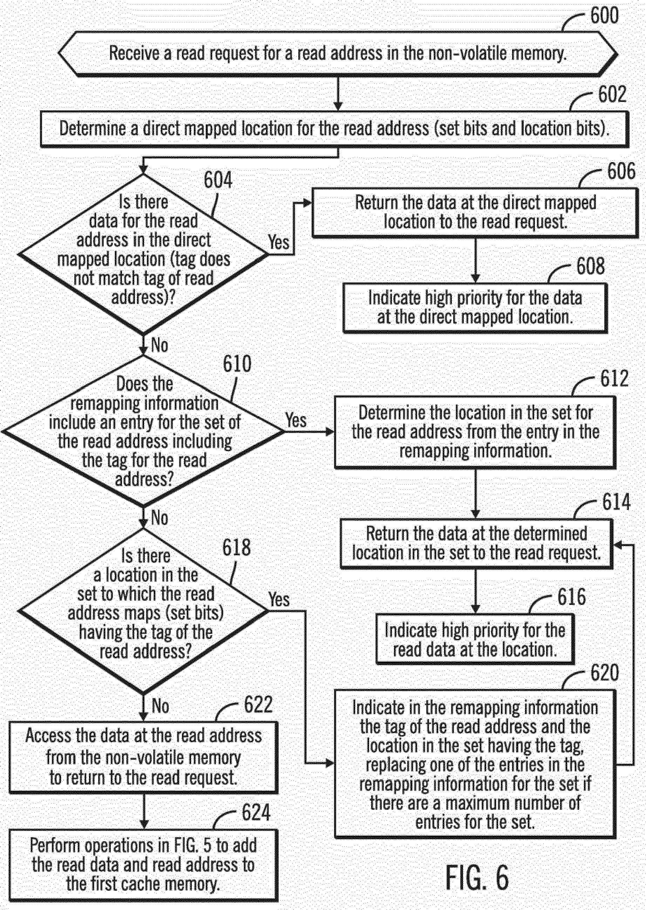

FIG. 6 illustrates an embodiment of operations to read data from the first memory cache.

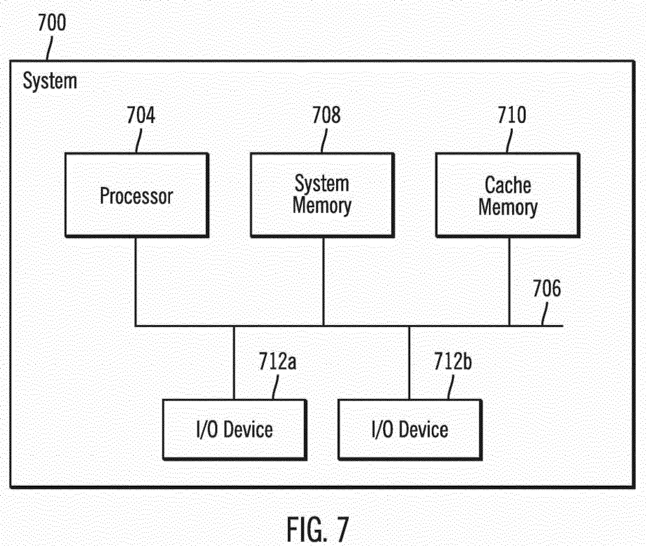

FIG. 7 illustrates an embodiment of a system in which the memory device of FIGs. 1 may be deployed.

### DESCRIPTION OF EMBODIMENTS

A processor main memory may comprise two levels of memory, including a faster access first level smaller memory, such as a Dynamic Random Access Memory (DRAM) system, that caches data for a second level larger and slower memory. The second level memory is presented to the host and operating system as the main memory while the first level memory functions as the cache and is transparent to the operating system. The management of the two level memory (2LM) may be performed by a 2LM engine in the processor of the host.

A two level main memory includes two levels of memory, including a faster access first level smaller volatile memory, such as a Dynamic Random Access Memory (DRAM) system, that caches data for a second level larger and slower or byte addressable write-in place non-volatile memory. The first level memory may be referred to as a near memory or cache memory and the second level memory may be referred to as a far memory or non-volatile memory.

The advantage of a direct mapped cache is that the location in the cache of the requested read address is known, and the data may be directly retrieved without having to perform a tag search of multiple cache locations as performed with a set associative cache. However, because multiple addresses from the second level memory map to one cache location for a direct mapped cache, the likelihood of a read miss increases. The advantage of a set associative cache is that the miss rate is reduced because a read address may be stored in any of the cache locations in the set to which it maps. However, the need to perform a tag-search before accessing the cache significantly increases read latency. An ideal cache would act as a direct-mapped cache when conflicts are rare and a set-associative cache when they are more common.

Described embodiments provide a just-in-time associativity cache that utilizes the direct mapped caching for read addresses that are more recently accessed and likely to have a higher hit rate and then switches to set associative caching for less recently accessed read addresses that are stored using a set associative caching to reduce read misses for less recently or frequently accessed data. However, lower latency is provided for the faster direct mapped cache location for the more frequently accessed data, i.e., data more recently accessed. In this way, when cache conflicts are rare, the direct mapped cache location is used to provide a high hit rate, and when cache conflicts are more common, a set associative caching is used to maintain the high hit rate as cache conflicts increase, i.e., read addresses that map to the same direct mapped cache location in cache are being more frequently accessed.

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Certain embodiments relate to storage device electronic assemblies. Embodiments include both devices and methods for forming electronic assemblies.

FIG. 1 illustrates an embodiment of a system 100 having a processor 102 including a plurality of processing cores 104 and an on-chip cache memory controller 106 to interface with a cache memory 110, also referred to as a cache memory, cache or first level memory. The cache memory controller 106 includes logic to access a cache memory 110 and may also communicate with a non-volatile memory controller 112 to access addresses in a non-volatile memory 114, or the second level memory. The cache memory controller 106 includes a cache manager 108 to use the cache memory 110 as a cache to store in cache locations 300 or cache blocks in the cache memory 110 the data for addresses in the non-volatile memory 114. The cache memory controller 106 may access the first level memory 110 and non-volatile memory controller 112 over an interface 116, including, by way of example, without limitation, a memory bus, Peripheral Component Interconnect (PCI) bus, such as the Peripheral Component Interconnect express (PCIe) bus, etc.

The cache memory 110 and non-volatile memory 114 may comprise a main memory of the processor 102, where the cache memory 110 operates as a cache for the non-volatile memory 114, having cache locations 300 to cache data and addresses from the non-volatile memory 114.

In one embodiment, the cache memory 110 may be comprised of one or more volatile memory devices requiring power to maintain the state of data stored by the medium. Non-limiting examples of volatile memory may include various types of random access memory (RAM), such as Dynamic Random Access Memory (DRAM), Dual Direct In-Line Memory Modules (DIMMs), synchronous dynamic random access memory (SDRAM), etc. In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

The non-volatile memory 114 may be comprised of a byte-addressable write in place non-volatile memory device, such as a ferroelectric random-access memory (FeTRAM), nanowire-based non-volatile memory, three-dimensional (3Dcrosspoint) memory, phase change memory (PCM), memory that incorporates memristor technology, Magnetoresistive random-access memory (MRAM), Spin Transfer Torque (STT)-MRAM, SRAM, storage devices, etc. In certain embodiments, the 3D crosspoint memory may comprise a transistor-less stackable cross point architecture in which memory cells sit at the intersection of word lines and bit lines and are individually addressable and in which bit storage is based on a change in bulk resistance. In a further embodiment, the non-volatile memory 114 may comprise a block addressable non-volatile memory, such as NAND dies (e.g., single level cell (SLC), multi-level cell (MLC), triple level cell (TLC) NAND memories, etc.).

The cache manager 108 determines whether data requested by an application communicating read requests to the processor 102 using an address in the non-volatile memory 114 is in the cache memory 110, and if not, the cache manager 108 fetches the requested data from the non-volatile memory 114 and stores in the cache memory 110 to be available for faster cache access for future accesses.

In one embodiment, the cache manager 108 may be part of a two level memory ("2LM") engine that manages a main memory for a processor having a first and second level memory devices. In a further embodiment, the cache manager 108 may be part of a combined caching agent and home agent configuration for caching data from a second level memory 114 in a first level memory 110, such as provided with the Intel Corporation QuickPath Interconnect logic. Other types of technologies and protocols may be used to implement the cache manager 108 to maintain a first level memory 110 as a cache for a larger second level memory 114.

The system 100 may also communicate with Input/Output (I/O) devices, which may comprise input devices (e.g., keyboard, touchscreen, mouse, etc.), display devices, graphics cards, ports, network interfaces, etc.

FIG. 2 illustrates an embodiment of the components of an address 200, as known in the prior art, used to address a location in the non-volatile memory 114, and includes tag bits 202, such as the most significant bits, that uniquely identify the address 200 in a cache set identified by the set bits 204 of the address 200, and block offset bits 206 comprising least significant bits of the address 200 that are used to locate the data in the cache location.

FIG. 3 illustrates an embodiment of one of the cache locations 300ᵢ, also referred to as a cache block, in the cache memory 110, and includes a valid/dirty flags 302 indicating whether the cache location 300ᵢ has valid data and dirty, e.g., updated, data; a tag 304 having tag bits 202 from the address 200 for the non-volatile memory 114; priority information 306 for the cache location 300ᵢ; and one or more data bytes 308₁, 308₂...308_{b} for the address 200.

The priority information 306 indicates a priority of the data stored in the cache location/block 300ᵢ. The priority 306 may comprise a value indicating a recentness of use of the data at the cache location 300ᵢ. If there are one or more bits used to represent the priority, then those bits may indicate a relative degree of recentness of use, such that over time, the priority or recentness of use of the data decreases as the data is not accessed over time. Accessing the data at a cache location 300ᵢ would increase the recentness of use or priority to a highest value, such as a Most Recently Used (MRU) value. In certain embodiments, there may be a limited number of priority or recentness of use values, such that multiple cache locations may have the same recentness of use value. For instance, the degree of recentness of use may be expressed by Least Recently Used (LRU) classes, where certain classes indicate the data was more recently accessed than data associated with other LRU classes. In alternative embodiments, each cache location 300ᵢ may have a unique priority 306 or recentness of use in a Least Recently Used (LRU) list, which would require more bits to represent. In embodiments where the cache locations 300ᵢ are grouped in sets, then the priority or recentness of use, e.g., LRU class, would be relative to other cache locations in the same set 120ᵢ.

FIG. 1 shows the cache sets identified by the set bits 204 as lines, e.g., 120ᵢ, in the cache locations 300, and each cache location is represented as a box in a cache set 120ᵢ. Each address 200 may map directly to a location 300ᵢ in a cache set 120ᵢ, identified by the set bits 204. Each address 200 would map to one unique direct mapped cache location 300_{DM} in the set 120ᵢ, identified by the set bits 204 of the address, where multiple of the addresses 200 in the non-volatile memory 114 may map to a same direct mapped cache location.

In one embodiment, the cache manager 108 may apply a hash function to the tag bits 202 of an address 200 that produces a value that maps to the direct mapped cache location 300ᵢ in the set 120ᵢ, identified by the set bits 204. The application of the hash function to multiple addresses 200 having different tag bits 202 that have the same set bits 204, i.e., map to a same cache set 120ᵢ, may result in the same hash value of bits that identify the same direct mapped cache location for those addresses. In this way, certain of the addresses 200 having the same set bits 204 would have the same direct mapped cache location 300ᵢ in the cache memory 110. In an alternative embodiment, the direct mapped cache location in a set 120ᵢ for an address may be determined by a subset of the bits from the set bits 204. For instance, if each set has 8 cache locations/blocks, also known as slots, then the bottom 3 bits of the set bits 204 may be used to determine the direct mapped cache location in the set 120ᵢ for the address 200.

The cache manager 108 maintains remapping information 400 (FIG. 1) which provides information on addresses for data in cache locations 300ᵢ that are not the direct mapped cache locations for the addresses. For instance, in certain situations, described below, the cache manager 108 may store data for an address 200 at a location in the set for the address that is not the direct mapped cache location based on the tag 202 of the address 200. In such case, the remapping information 400 would indicate the location for addresses 200 not stored in their direct mapped cache location.

FIG. 4 illustrates an embodiment of a remapping information entry 400ᵢ for an address 200 stored at a location 300ᵢ in the cache memory 110 that is not the direct mapped cache location for that address 200, where the entry 400ᵢ may include the tag 402 of the address tag 202; the set 404 comprising the set bits 204 for the address 200; and a location 406 or block in the set 404 where the data for the address 200 and address 200 are stored, which comprises a location other than the direct mapped cache location for the address 200.

In one embodiment, to conserve space, the remapping information 400 may only maintain a limited number of remapping information entries 400ᵢ for each set 120ᵢ of locations in the cache to limit the size of the remapping information 400, which may comprise a table or other data structure. In such case, those addresses that are remapped and not indicated in a remapping information entry 400ᵢ can only be located by examining the tag 304 in the location 300ᵢ to determine the cache location 300ᵢ having data for a requested address.

In one embodiment, the cache memory controller 106, including cache manager 108 and remapping information 400, may be implemented on an integrated circuit or chip forming the processor 102, as part of a system-on-chip (SOC) implementation. In an alternative, embodiment, the cache manager 108 and remapping information 400 may be implemented as software executed by the processor 102 to perform cache management at an operating system level.

FIG. 5 illustrates an embodiment of operations performed by the cache manager 108 to add data to a cache location 300ᵢ in the cache memory 110 for a write to the non-volatile memory 114 or for a read miss, where requested data is not in the cache memory 110. Upon receiving (at block 500) data for a target address 200_{T} in the non-volatile memory 114 to add to the cache memory 110, the cache manager 108 determines (at block 502) a direct mapped cache location 300_{DM} for the target address, using the set bits 204 to determine the set 120ᵢ and the tag bits 202, such as applying a hash function to the tag bits 202 to determine a location in the set 120ᵢ identified by the set bits 204. A determination is made (at block 504) whether there is another address in the direct mapped cache location 300_{DM}, such as having tag bits 304 different from the tag bits 202 for the target address 200_{T}. If (at block 504) the determined direct mapped cache location 300_{DM} does not have data for a different address, i.e., is not storing valid data or is storing data for the target address, i.e., having the same tag bits 202, then the data for the target address 200_{T} is written (at block 506) to the direct mapped cache location 300_{DM} and high priority is indicated (at block 508) in the priority information 306 for the written data at the direct mapped cache location 300_{DM}. For instance, the most recently used value may be indicated as the priority information 306 for the written direct mapped cache location 300_{DM}. Other priorities for locations 300ᵢ in the cache set 120ᵢ may have their priority or recentness of use reduced.

If (at block 504) there is another address in the direct mapped cache location 300_{DM}, then the cache manager 108 determines (at block 510) from the priority information 306 for the cache location 300_{DM} whether the priority, e.g., recentness of use, of the data at the direct mapped cache location 300_{DM} has a high priority, which may comprise a priority value greater than a threshold of values or a most recently used (MRU) value. If (at block 510) the priority of the data at the direct mapped cache location 300_{DM} is not high, i.e., the data has a relatively low recentness of use, then if (at block 512) the data at the direct mapped cache location 300_{DM} is dirty, then the data from the direct mapped cache location 300_{DM} is destaged to the address 200 in the non-volatile memory 114, indicated in the direct mapped cache location 300_{DM}. From block 512, control proceeds back to block 506 to write the data for the target address to the direct mapped cache location 300_{DM}. If the data at the direct mapped cache location 300_{DM} was not dirty (i.e., updated), then the direct mapped cache location 300_{DM} would just be overwritten at block 506.

If (at block 504) the priority of the data at the directed mapped location 300_{DM} is a high priority, or a predetermined threshold priority or recentness of use, then the cache manager 108 determines (at block 514) whether there is a cache location 300ᵢ in the set to which the target address 200_{T} maps according to the set bits 204 that does not have data. If such an empty location 300ᵢ is found, then the cache manager 108 writes (at block 516) the data for the target address 200_{T} and target address to the location 300ᵢ in the set 120ᵢ having no data. The priority 306 for the written cache location 300ᵢ is indicated (at block 518) as high. The cache manager 108 further indicates (at block 520) in an entry 400ᵢ in the remapping information 400 has a tag 402 set to the tag 202 of the target address 200_{T}, a set 406 set to the set bits 204 of the target address 200_{T}, and a location in the set 406 set to the cache location 300ᵢ to which the data was written. The new entry 400ᵢ would replace another entry in the remapping information 400 for the set 120ᵢ if there are a maximum number of entries 400ᵢ for the set.

If (at block 514) there is no location in the set 120ᵢ to which the target address 200_{T} set bits 204 map having no data, i.e., available to be written, then the cache manager 108 determines (at block 522) a location 300ᵢ in the set 120ᵢ having data with a low priority, such as a least recently used priority 306. If (at block 524) the data at the determined location is dirty, then it is destaged. The data for the target address 200_{T} and the target address 200_{T} are written (at block 526) to the determined location 300ᵢ in the set 120ᵢ. Control then proceeds to block 518 to update the priority for the written location 300_{i_}and the remapping information 400.

With the operations of FIG. 5 the direct mapped cache location is first considered for data being added to the cache and if the direct mapped cache location already has high priority cached data, with a high recentness of use, then another location in the cache set for the target address may be selected to store the data for the target address. At this point, the cache manager 108 switches from direct mapped caching to cache associativity. With the described embodiments, the used location other than the direct mapped cache location is indicated in the remapping information to provide for fast lookup of the set associative location for the target address of the added data.

FIG. 6 illustrates an embodiment of operations performed by the cache manager 108 to read data at a read address in the non-volatile memory 114 by first checking if the requested read data is in the cache memory 110. Upon receiving (at block 600) a read request for a read address 200_{R} in the non-volatile memory 114, the cache manager 108 determines (at block 602) a direct mapped cache location 300_{DM} for the read address 200_{R}, using the set bits 204 to determine the set 120ᵢ and the tag bits 202 to determine the specific location 300ᵢ in the set 120ᵢ. The cache manager 108 may apply a hash function to the tag bits 202 to determine a location in the set 120ᵢ identified by the set bits 204. The cache manager 108 determines (at block 604) whether there is data for the read address 200_{R} in the direct mapped cache location 300_{DM}, such as having tag bits 304 the same as the tag bits 202 for the read address 200_{R}. If (at block 604) the determined direct mapped cache location 300_{DM} does have data for the read address 200_{R}, then the data at the direct mapped cache location 300_{DM} is returned (at block 606) to the read request, i.e.., a cache hit, and the priority information 306 for the direct mapped cache location 300_{DM} is indicated (at block 608) as high, e.g., most recently used or high LRU class.

If (at block 604) the data at the direct mapped cache location 300_{DM} does not have data for the read address 200_{R}, then the cache manager 108 determines (at block 610) whether the remapping information 400 has an entry 400ᵢ whose tag 402 and set 404 bits match those 202 and 204 of the read address 200_{R}.. If there is a remapping information entry 400ᵢ having the read address 200_{R}, then the cache manager 108 determines (at block 612) the location in the set 406 for the read address 200_{R} from the entry 400ᵢ and returns (at block 614) the data from the location 406 to the read request and indicates (at block 616) the priority information 308 for the read data at the location 406 as high.

If (at block 610) the remapping information 400 does not have an entry 400ᵢ having tag 402 and set 404 bits matching the tag 202 and set 204 bits of the read address 200_{R}, then the cache manager 108 determines (at block 618) whether there is a location 300ᵢ in the set to which the read address 200_{R} maps having the tag 304 matching the tag 202 of the read address 200_{R}, a set associative tag search. If so, then the cache manager 108 indicates (at block 620) in the remapping information 400 the tag 202 of the read address 200_{R}, in field 402, and the location 300ᵢ in the set having the tag in field 406 of the entry 400ᵢ. Creating the entry 400ᵢ for the read data may replace one of the entries 400ⱼ in the remapping information 400 for the set 120ᵢ if there are a maximum number of entries for the set. Control then proceeds to block 614 to return the data at the determined location.

If (at block 618) there is no cache location 300ᵢ in the set to which the read address 200_{R} maps having the read address 200_{R}, then there is a cache miss and the cache manager 108 accesses (at block 622) the data at the read address from the non-volatile memory 114 to return to the read request. The cache manager 108 would then perform (at block 624) the operations in FIG. 5 to add the read data for the read miss to a cache location 300ᵢ in the cache memory 110.

With the embodiments of FIG. 6, the cache manager 108 first uses direct mapped caching to check the direct mapped cache location for the requested read data and if not there uses the remapping information 400 to determine if the requested read data is in a mapped cache location 300ᵢ other than the direct mapped cache location. If the remapping information 400 does not provide the cache location having the requested data, then the cache manager 108 switches to set associative caching to perform a tag search to search every cache location in the set for the tag of the requested read address.

FIG. 7 illustrates an embodiment of a system 700 in which the cache memory 110 may be deployed as a cache memory 710 and the non-volatile memory 114 may be deployed as the system memory device 708 and/or a storage device. The system includes a processor 704 that communicates over a bus 706 with a system memory device 708 in which programs, operands and parameters being executed are cached, and another memory device 710, which may comprise a volatile or other fast access memory device, to cache data for the system memory 708. The processor 704 may also communicate with Input/Output (I/O) devices 712a, 712b, which may comprise input devices (e.g., keyboard, touchscreen, mouse, etc.), display devices, graphics cards, ports, network interfaces, etc. The memory 708 and cache memory 710 may be coupled to an interface on the system 700 motherboard, mounted on the system 700 motherboard, or deployed in an external memory device or accessible over a network.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

The reference characters used herein, such as b, i, and n, are used herein to denote a variable number of instances of an element, which may represent the same or different values, and may represent the same or different value when used with different or the same elements in different described instances.

### EXAMPLES

The following examples pertain to further embodiments.
Example 1 is an apparatus for just-in time cache associativity to switch between using set associative caching and direct mapped caching, comprising: a cache memory; a byte addressable write-in-place non-volatile memory; and a cache manager to: determine a direct mapped cache location in the cache memory from the a target address in the non-volatile memory; write the data for the target address at an available cache location in the cache memory different from the direct mapped cache location in response to the direct mapped cache location storing data for another address in the non-volatile memory; and write the data for the target address in the direct mapped cache location in response to the direct mapped cache location not storing data for another address in the non-volatile memory.
In Example 2, the subject matter of examples 1 and 3-10 can optionally include that each address from the non-volatile memory maps to a set of a plurality of sets of cache locations in the cache memory, wherein each address from the non-volatile memory maps to one of the sets, and wherein the available cache location at which the data for the target address is written is in the set of cache locations to which the target address maps.
In Example 3, the subject matter of examples 1, 2 and 4-10 can optionally include that the cache manager is further to: generate remapping information including a number of remapped addresses for each set that is less than a number of cache locations in each set.
In Example 4, the subject matter of examples 1-3 and 5-10 can optionally include that the cache manager is further to: indicate in remapping information at least a portion of the target address and the available cache location in the cache memory, different from the direct mapped cache location, at which the data for the target address was written.
In Example 5, the subject matter of examples 1-4 and 6-10 can optionally include that the cache manager is further to: receive a read request to a read address in the non-volatile memory; return the data for the read address from a direct mapped cache location for the read address in response to the direct mapped cache location in the cache memory having data for the read address; determine whether the read address is indicated in the remapping information at a cache location in the cache memory different from the direct mapped cache location for the read address in response to the direct mapped cache location not including data for the read address; and return data for the read address indicated in the remapping information in response to determining that the read address is indicated in the remapping information.
In Example 6, the subject matter of examples 1-5 and 7-10 can optionally include that the cache manager is further to: determine whether the read address is in one of a set of cache locations to which the read address maps in response to determining that the remapping information does not indicate the read address; and return data for the read address at one of the cache locations in the set in response to determining that the read address is in one of the set of cache locations.
In Example 7, the subject matter of examples 1-6 and 8-10 can optionally include that the cache manager is further to: determine whether data in the direct mapped cache location in the cache memory has a high priority in response to the direct mapped cache location storing data for another address; and write the data for the target address at the direct mapped cache location in response to determining that the data in the direct mapped cache location does not have the high priority, wherein the data for the target address is written to the available cache location in response to the data in the directed mapped cache location having the high priority.
In Example 8, the subject matter of examples 1-7 and 9-10 can optionally include that the data in the cache memory has a high priority or low priority based on a recentness of access of the data, wherein relatively more recently accessed data has the high priority and relatively less recently accessed data does not have the high priority.
In Example 9, the subject matter of examples 1-8 and 10 can optionally include that the cache manager is further to: process cache locations in a set of a plurality of sets of cache locations in the cache memory to which the target address maps to determine one of the cache locations in the set having the low priority, wherein the available cache location to which the data is written comprises the cache location in the set to which the target address maps having the lower priority.
In Example 10, the subject matter of examples 1-9 can optionally include a processor comprising an integrated circuit and a cache memory controller implemented on the processor integrated circuit dies. The cache memory controller includes the cache manager and manages access to the cache memory and communicates with the non-volatile memory.
Example 11 is a system for just-in time cache associativity to switch between using set associative caching and direct mapped caching, comprising: a cache memory; a non-volatile memory; and a processor including a cache manager to: determine a direct mapped cache location in the cache memory from a target address in the non-volatile memory; write the data for the target address at an available cache location in the cache memory different from the direct mapped cache location in response to the direct mapped cache location storing data for another address in the non-volatile memory; and write the data for the target address in the direct mapped cache location in response to the direct mapped cache location not storing data for another address in the non-volatile memory.
In Example 12, the subject matter of examples 11 and 13-18 can optionally include that each address from the non-volatile memory maps to a set of a plurality of sets of cache locations in the cache memory, wherein each address from the non-volatile memory maps to one of the sets, and wherein the available cache location at which the data for the target address is written is in the set of cache locations to which the target address maps.
In Example 13, the subject matter of examples 11, 12 and 14-18 can optionally include that the cache manager is further to: indicate in remapping information at least a portion of the target address and the available cache location in the cache memory, different from the direct mapped cache location, at which the data for the target address was written.
In Example 14, the subject matter of examples 11-13 and 15-18 can optionally include that the cache manager is further to: receive a read request to a read address in the non-volatile memory; return the data for the read address from a direct mapped cache location for the read address in response to the direct mapped cache location in the cache memory having data for the read address; determine whether the read address is indicated in the remapping information at a cache location in the cache memory different from the direct mapped cache location for the read address in response to the direct mapped cache location not including data for the read address; and return data for the read address indicated in the remapping information in response to determining that the read address is indicated in the remapping information.
In Example 15, the subject matter of examples 11-14 and 16-18 can optionally include that the cache manager is further to: determine whether the read address is in one of a set of cache locations to which the read address maps in response to determining that the remapping information does not indicate the read address; and return data for the read address at one of the cache locations in the set in response to determining that the read address is in one of the set of cache locations.
In Example 16, the subject matter of examples 11-15 and 17-18 can optionally include that the cache manager is further to: determine whether data in the direct mapped cache location in the cache memory has a high priority in response to the direct mapped cache location storing data for another address; and write the data for the target address at the direct mapped cache location in response to determining that the data in the direct mapped cache location does not have the high priority, wherein the data for the target address is written to the available cache location in response to the data in the directed mapped cache location having the high priority.
In Example 17, the subject matter of examples 11-16 and 18 can optionally include that the data in the cache memory has a high priority or low priority based on a recentness of access of the data, wherein relatively more recently accessed data has the high priority and relatively less recently accessed data does not have the high priority.
In Example 18, the subject matter of examples 11-17 can optionally include that the cache manager is further to: process cache locations in a set of a plurality of sets of cache locations in the cache memory to which the target address maps to determine one of the cache locations in the set having the low priority, wherein the available cache location to which the data is written comprises the cache location in the set to which the target address maps having the lower priority.
Example 19 is a method for just-in time cache associativity to switch between using set associative caching and direct mapped caching for a cache memory having cache locations as a cache for a non-volatile memory, comprising: determining a direct mapped cache location in the cache memory from a target address in the non-volatile memory; writing the data for the target address at an available cache location in the cache memory different from the direct mapped cache location in response to the direct mapped cache location storing data for another address in the non-volatile memory; and writing the data for the target address in the direct mapped cache location in response to the direct mapped cache location not storing data for another address in the non-volatile memory.
In Example 20, the subject matter of examples 19 and 21-25 can optionally include that each address from the non-volatile memory maps to a set of a plurality of sets of cache locations in the cache memory, wherein each address from the non-volatile memory maps to one of the sets, and wherein the available cache location at which the data for the target address is written is in the set of cache locations to which the target address maps.
In Example 21, the subject matter of examples 19, 20 and 22-25 can optionally include indicating in remapping information at least a portion of the target address and the available cache location in the cache memory, different from the direct mapped cache location, at which the data for the target address was written.
In Example 22, the subject matter of examples 19-21 and 23-25 can optionally include receiving a read request to a read address in the non-volatile memory; returning the data for the read address from a direct mapped cache location for the read address in response to the direct mapped cache location in the cache memory having data for the read address; determining whether the read address is indicated in the remapping information at a cache location in the cache memory different from the direct mapped cache location for the read address in response to the direct mapped cache location not including data for the read address; and returning data for the read address indicated in the remapping information in response to determining that the read address is indicated in the remapping information.
In Example 23, the subject matter of examples 19-22 and 24-25 can optionally include determining whether the read address is in one of a set of cache locations to which the read address maps in response to determining that the remapping information does not indicate the read address; and return data for the read address at one of the cache locations in the set in response to determining that the read address is in one of the set of cache locations.
In Example 24, the subject matter of examples 19-23 and 25 can optionally include determining whether data in the direct mapped cache location in the cache memory has a high priority in response to the direct mapped cache location storing data for another address; and writing the data for the target address at the direct mapped cache location in response to determining that the data in the direct mapped cache location does not have the high priority, wherein the data for the target address is written to the available cache location in response to the data in the directed mapped cache location having the high priority.
In Example 25, the subject matter of examples 19-24 can optionally include that data in the cache memory has a high priority or low priority based on a recentness of access of the data, wherein relatively more recently accessed data has the high priority and relatively less recently accessed data does not have the high priority.
Example 26 is an apparatus for just-in time cache associativity to switch between using set associative caching and direct mapped caching for a cache memory having cache locations as a cache for a non-volatile memory, comprising: means for determining a direct mapped cache location in the cache memory from a target address in the non-volatile memory; means writing the data for the target address at an available cache location in the cache memory different from the direct mapped cache location in response to the direct mapped cache location storing data for another address in the non-volatile memory; and means writing the data for the target address in the direct mapped cache location in response to the direct mapped cache location not storing data for another address in the non-volatile memory.
Example 27 is an apparatus comprising means to perform a method as claimed in any preceding claim.
Example 28 is a machine-readable storage including machine-readable instructions, when executed, to implement a method or realize an apparatus as claimed in any preceding claim.

## Claims

1. An apparatus for cache associativity, comprising:
a cache memory (110);
a byte addressable non-volatile memory (114); and
a cache manager (108) configured to:
determine a direct mapped cache location in the cache memory from a target address in the non-volatile memory;
write the data for the target address at an available cache location in the cache memory different from the direct mapped cache location in response to the direct mapped cache location storing data for another address in the non-volatile memory; and
write the data for the target address in the direct mapped cache location in response to the direct mapped cache location not storing data for another address in the non-volatile memory;
**characterised in that** the cache manager (108) is further configured to:
map each address from the non-volatile memory (114) to a set of a plurality of sets of cache locations in the cache memory;
map each address from the non-volatile memory (114) to one of the sets;
write the data for the target address to an available cache location in the set of cache locations to which the target address maps; and
indicate in remapping information at least a portion of the target address and the available cache location in the cache memory, different from the direct mapped cache location, at which the data for the target address was written.

2. The apparatus of claim 1, wherein the cache manager (108) is further configured to apply a hash function to tag bits (202) to determine the available cache location in the set.

3. The apparatus of claim 2, wherein the cache manager (108) is further configured to:
generate remapping information including a number of remapped addresses for each set that is less than a number of cache locations in each set.

4. The apparatus of claim 1, wherein the cache manager (108) is further configured to:
receive a read request to a read address in the non-volatile memory; and
return the data for the read address from a direct mapped cache location for the read address in response to the direct mapped cache location in the cache memory having data for the read address;
determine whether the read address is indicated in the remapping information at a cache location in the cache memory different from the direct mapped cache location for the read address in response to the direct mapped cache location not including data for the read address; and
return data for the read address indicated in the remapping information in response to determining that the read address is indicated in the remapping information.

5. The apparatus of claim 4, wherein the cache manager (108) is further configured to:
determine whether the read address is in one of a set of cache locations to which the read address maps in response to determining that the remapping information does not indicate the read address; and
return data for the read address at one of the cache locations in the set in response to determining that the read address is in one of the set of cache locations.

6. The apparatus of claim 1, wherein the cache manager (108) is further configured to:
determine whether data in the direct mapped cache location in the cache memory has a high priority in response to the direct mapped cache location storing data for another address; and
write the data for the target address at the direct mapped cache location in response to determining that the data in the direct mapped cache location does not have the high priority, wherein the data for the target address is written to the available cache location in response to the data in the directed mapped cache location having the high priority.

7. The apparatus of claim 6, wherein data in the cache memory (108) has a high priority or low priority based on a recentness of access of the data, wherein relatively more recently accessed data has the high priority and relatively less recently accessed data does not have the high priority.

8. The apparatus of claim 7, wherein the cache manager (108) is further configured to:
process cache locations in a set of a plurality of sets of cache locations in the cache memory to which the target address maps to determine one of the cache locations in the set having the low priority, wherein the available cache location to which the data is written comprises the cache location in the set to which the target address maps having the lower priority.

9. The apparatus as in any one of claims 1 to 8, further comprising:
a processor (704) comprising an integrated circuit; and
a cache memory controller (106) implemented on the processor integrated circuit dies, wherein the cache memory controller (106) includes the cache manager (108) and manages access to the cache memory (110) and communicates with the non-volatile memory (114).

10. A method for cache associativity, comprising:
determining a direct mapped cache location in a cache memory (110) from a target address in a non-volatile memory (114);
writing the data for the target address at an available cache location in the cache memory (110) different from the direct mapped cache location in response to the direct mapped cache location storing data for another address in the non-volatile memory (114); and
writing the data for the target address in the direct mapped cache location in response to the direct mapped cache location not storing data for another address in the non-volatile memory (114);
**characterised by**:
each address from the non-volatile memory (114) mapping to a set of a plurality of sets of cache locations in the cache memory (110);
each address from the non-volatile memory (114) mapping to one of the sets;
the available cache location at which the data for the target address is written is in the set of cache locations to which the target address maps; and
indicating in remapping information at least a portion of the target address and the available cache location in the cache memory, different from the direct mapped cache location, at which the data for the target address was written.

11. The method of claim 10, further comprising applying a hash function to tag bits (202) to determine the available cache location in the set.

12. The method of claim 10, further comprising:
receiving a read request to a read address in the non-volatile memory; and
return the data for the read address from a direct mapped cache location for the read address in response to the direct mapped cache location in the cache memory having data for the read address;
determine whether the read address is indicated in the remapping information at a cache location in the cache memory different from the direct mapped cache location for the read address in response to the direct mapped cache location not including data for the read address; and
return data for the read address indicated in the remapping information in response to determining that the read address is indicated in the remapping information.

13. The method of claim 12, further comprising:
determining whether the read address is in one of a set of cache locations to which the read address maps in response to determining that the remapping information does not indicate the read address; and
returning data for the read address at one of the cache locations in the set in response to determining that the read address is in one of the set of cache locations.

14. The method of claim 10, further comprising:
determining whether data in the direct mapped cache location in the cache memory has a high priority in response to the direct mapped cache location storing data for another address; and
writing the data for the target address at the direct mapped cache location in response to determining that the data in the direct mapped cache location does not have the high priority, wherein the data for the target address is written to the available cache location in response to the data in the directed mapped cache location having the high priority.

15. Machine-readable storage including machine-readable instructions to cause an apparatus to carry out the steps of the method of any one of claims 10 to 14 when the instructions are executed by a computer.

## Patentansprüche

1. Vorrichtung für eine Cache-Zuordnungsfähigkeit, die Folgendes umfasst:
einen Cache-Speicher (110);
einen byte-adressierbaren nichtflüchtigen Speicher (114); und
einen Cache-Manager (108), der konfiguriert ist zum:
Bestimmen eines direkten abgebildeten Cache-Orts in dem Cache-Speicher von einer Zieladresse in dem nichtflüchtigen Speicher;
Schreiben der Daten für die Zieladresse an einen verfügbaren Cache-Ort in dem Cache-Speicher, der von dem direkten abgebildeten Cache-Ort verschieden ist, als Reaktion darauf, dass der direkte abgebildete Cache-Ort Daten für eine andere Adresse in dem nichtflüchtigen Speicher speichert; und
Schreiben der Daten für die Zieladresse in den direkten abgebildeten Cache-Ort als Reaktion darauf, dass der direkte abgebildete Cache-Ort keine Daten für eine andere Adresse in dem nichtflüchtigen Speicher speichert;
**dadurch gekennzeichnet, dass** der Cache-Manager (108) ferner konfiguriert ist zum:
Abbilden jeder Adresse von dem nichtflüchtigen Speicher (114) auf eine von mehreren Gruppen von Cache-Orten in dem Cache-Speicher;
Abbilden jeder Adresse von dem nichtflüchtigen Speicher (114) auf eine der Gruppen;
Schreiben der Daten für die Zieladresse in einen verfügbaren Cache-Ort in der Gruppe von Cache-Orten, auf die die Zieladresse abgebildet ist; und
Angeben in Neuabbildungsinformationen zumindest eines Teils der Zieladresse und des verfügbaren Cache-Orts in dem Cache-Speicher, der von dem direkten abgebildeten Cache-Ort verschieden ist und in den die Daten für die Zieladresse geschrieben worden sind.

2. Vorrichtung nach Anspruch 1, wobei der Cache-Manager (108) ferner konfiguriert ist, eine Hash-Funktion auf Etikettenbits (202) anzuwenden, um den verfügbaren Cache-Ort in der Gruppe zu bestimmen.

3. Vorrichtung nach Anspruch 2, wobei der Cache-Manager (108) ferner konfiguriert ist zum:
Erzeugen von Neuabbildungsinformationen, die eine Anzahl von neuabgebildeten Adressen für jede Gruppe enthalten, die kleiner als eine Anzahl von Cache-Orten in jeder Gruppe ist.

4. Vorrichtung nach Anspruch 1, wobei der Cache-Manager (108) ferner konfiguriert ist zum:
Empfangen einer Leseanforderung, eine Adresse in dem nichtflüchtigen Speicher zu lesen; und
Zurückgeben der Daten für die Leseadresse von einem direkten abgebildeten Cache-Ort für die Leseadresse als Reaktion darauf, dass der direkte abgebildete Cache-Ort in dem Cache-Speicher Daten für die Leseadresse besitzt;
Bestimmen, ob die Leseadresse in den Neuabbildungsinformationen bei einem Cache-Ort in dem Cache-Speicher, der von dem direkten abgebildeten Cache-Ort für die Leseadresse verschieden ist, angegeben ist, als Reaktion darauf, dass der direkte abgebildete Cache-Ort keine Daten für die Leseadresse enthält; und
Zurückgeben von Daten für die Leseadresse, die in den Neuabbildungsinformationen angegeben ist, als Reaktion auf das Bestimmen, dass die Leseadresse in den Neuabbildungsinformationen angegeben ist.

5. Vorrichtung nach Anspruch 4, wobei der Cache-Manager (108) ferner konfiguriert ist zum:
Bestimmen, ob die Leseadresse in einem einer Gruppe von Cache-Orten ist, auf die die Leseadresse abgebildet ist, als Reaktion auf das Bestimmen, dass die Neuabbildungsinformationen die Leseadresse nicht angeben; und
Zurückgeben von Daten für die Leseadresse an einem der Cache-Orte in der Gruppe als Reaktion auf das Bestimmen, dass die Leseadresse in einem der Gruppe von Cache-Orten ist.

6. Vorrichtung nach Anspruch 1, wobei der Cache-Manager (108) ferner konfiguriert ist zum:
Bestimmen, ob Daten in dem direkten abgebildeten Cache-Ort in dem Cache-Speicher eine hohe Priorität besitzen, als Reaktion darauf, dass der direkte abgebildete Cache-Ort Daten für eine andere Adresse speichert; und
Schreiben der Daten für die Zieladresse in den direkten abgebildeten Cache-Ort als Reaktion auf das Bestimmen, dass die Daten in dem direkten abgebildeten Cache-Ort keine hohe Priorität besitzen, wobei die Daten für die Zieladresse als Reaktion darauf, dass die Daten in dem direkten abgebildeten Cache-Ort die hohe Priorität besitzen, in den verfügbaren Cache-Ort geschrieben werden.

7. Vorrichtung nach Anspruch 6,
wobei Daten in dem Cache-Speicher (108) anhand einer Aktualität des Zugriffs auf die Daten eine hohe Priorität oder eine niedrige Priorität besitzen, wobei Daten, auf die vor relativ kürzerer Zeit zugegriffen wurde, die hohe Priorität besitzen und Daten, auf die vor relativ längerer Zeit zugegriffen wurde, nicht die hohe Priorität besitzen.

8. Vorrichtung nach Anspruch 7, wobei der Cache-Manager (108) ferner konfiguriert ist zum:
Verarbeiten von Cache-Orten in einer Gruppe mehrerer Gruppen von Cache-Orten in dem Cache-Speicher, auf die die Zieladresse abgebildet ist, um einen der Cache-Orte in der Gruppe von Cache-Orten mit der niedrige Priorität zu bestimmen, wobei der verfügbare Cache-Ort, in den die Daten geschrieben werden, den Cache-Ort in der Gruppe mit der niedrigeren Priorität umfasst, auf den die Zieladresse abgebildet ist.

9. Vorrichtung nach einem der Ansprüche 1 bis 8, die ferner Folgendes umfasst:
einen Prozessor (704), der eine integrierte Schaltung umfasst; und
eine Cache-Speichersteuereinheit (106), die auf den Chips der integrierten Schaltung des Prozessors implementiert ist, wobei die Cache-Speichersteuereinheit (106) den Cache-Manager (108) enthält und den Zugriff auf den Cache-Speicher (110) managt und mit dem nichtflüchtigen Speicher (114) kommuniziert.

10. Verfahren für eine Cache-Zuordnungsfähigkeit, das Folgendes umfasst:
Bestimmen eines direkten abgebildeten Cache-Orts in einem Cache-Speicher (110) von einer Zieladresse in dem nichtflüchtigen Speicher (114);
Schreiben der Daten für die Zieladresse in einen verfügbaren Cache-Ort in dem Cache-Speicher (110), der von dem direkten abgebildeten Cache-Ort verschieden ist, als Reaktion darauf, dass der direkte abgebildete Cache-Ort Daten für eine andere Adresse in dem nichtflüchtigen Speicher (114) speichert; und
Schreiben der Daten für die Zieladresse in den direkten abgebildeten Cache-Ort als Reaktion darauf, dass der direkte abgebildete Cache-Ort keine Daten für eine andere Adresse in dem nichtflüchtigen Speicher (114) speichert;
**dadurch gekennzeichnet, dass**:
jede Adresse von dem nichtflüchtigen Speicher (114) auf eine Gruppe mehrerer Gruppen von Cache-Orten in dem Cache-Speicher (110) abgebildet ist;
jede Adresse von dem nichtflüchtigen Speicher (114) auf eine der Gruppen abgebildet ist;
der verfügbare Cache-Ort, in den die Daten für die Zieladresse geschrieben werden, in der Gruppe von Cache-Orten ist, auf die die Zieladresse abgebildet ist; und
Angeben in Neuabbildungsinformationen zumindest eines Teils der Zieladresse und des verfügbaren Cache-Orts in dem Cache-Speicher, der von dem direkten abgebildeten Cache-Ort verschieden ist und in den die Daten für die Zieladresse geschrieben worden sind.

11. Verfahren nach Anspruch 10, das ferner Folgendes umfasst, eine Hash-Funktion auf Etikettenbits (202) anzuwenden, um den verfügbaren Cache-Ort in der Gruppe zu bestimmen.

12. Verfahren nach Anspruch 10, das ferner Folgendes umfasst:
Empfangen einer Leseanforderung an eine Leseadresse in dem nichtflüchtigen Speicher; und
Zurückgeben der Daten für die Leseadresse von einem direkten abgebildeten Cache-Ort für die Leseadresse als Reaktion darauf, dass der direkte abgebildete Cache-Ort in dem Cache-Speicher Daten für die Leseadresse besitzt;
Bestimmen, ob die Leseadresse in den Neuabbildungsinformationen bei einem Cache-Ort in dem Cache-Speicher, der von dem direkten abgebildeten Cache-Ort für die Leseadresse verschieden ist, angegeben ist, als Reaktion darauf, dass der direkte abgebildete Cache-Ort keine Daten für die Leseadresse enthält; und
Zurückgeben von Daten für die Leseadresse, die in den Neuabbildungsinformationen angegeben sind, als Reaktion auf das Bestimmen, dass die Leseadresse in den Neuabbildungsinformationen angegeben ist.

13. Verfahren nach Anspruch 12, das ferner Folgendes umfasst:
Bestimmen, ob die Leseadresse in einem einer Gruppe von Cache-Orten ist, auf die die Leseadresse abgebildet ist, als Reaktion auf das Bestimmen, dass die Neuabbildungsinformationen die Leseadresse nicht angeben; und
Zurückgeben von Daten für die Leseadresse an einem der Cache-Orte in der Gruppe als Reaktion auf das Bestimmen, dass die Leseadresse in einem der Gruppe von Cache-Orten ist.

14. Verfahren nach Anspruch 10, das ferner Folgendes umfasst:
Bestimmen, ob Daten in dem direkten abgebildeten Cache-Ort in dem Cache-Speicher eine hohe Priorität besitzen, als Reaktion darauf, dass der direkte abgebildete Cache-Ort Daten für eine andere Adresse speichert; und
Schreiben der Daten für die Zieladresse in den direkten abgebildeten Cache-Ort als Reaktion auf das Bestimmen, dass die Daten in dem direkten abgebildeten Cache-Ort keine hohe Priorität besitzen, wobei die Daten für die Zieladresse als Reaktion darauf, dass die Daten in dem direkten abgebildeten Cache-Ort die hohe Priorität besitzen, in den verfügbaren Cache-Ort geschrieben werden.

15. Maschinenlesbarer Speicher, der maschinenlesbare Anweisungen enthält, um zu bewirken, dass eine Vorrichtung die Schritte des Verfahrens nach einem der Ansprüche 10 bis 14 ausführt, wenn die Anweisungen durch einen Computer ausgeführt werden.

## Revendications

1. Appareil d'associativité de cache, comportant :
une mémoire cache (110) ;
une mémoire non volatile (114) adressable par octets ; et
un gestionnaire (108) de cache configuré pour :
déterminer un emplacement de cache à mappage direct dans la mémoire cache à partir d'une adresse cible dans la mémoire non volatile ;
écrire les données pour l'adresse cible à un emplacement de cache disponible dans la mémoire cache différent de l'emplacement de cache à mappage direct en réaction au fait que l'emplacement de cache à mappage direct conserve des données pour une autre adresse dans la mémoire non volatile ; et
écrire les données pour l'adresse cible dans l'emplacement de cache à mappage direct en réaction au fait que l'emplacement de cache à mappage direct ne conserve pas de données pour une autre adresse dans la mémoire non volatile ;
**caractérisé en ce que** le gestionnaire (108) de cache est en outre configuré pour :
faire correspondre chaque adresse provenant de la mémoire non volatile (114) à un ensemble parmi une pluralité d'ensembles d'emplacements de cache dans la mémoire cache ;
faire correspondre chaque adresse provenant de la mémoire non volatile (114) à un des ensembles ;
écrire les données pour l'adresse cible dans un emplacement de cache disponible dans l'ensemble d'emplacements de cache auquel correspond l'adresse cible ; et
indiquer dans des informations de remappage au moins une partie de l'adresse cible et l'emplacement de cache disponible dans la mémoire cache, différent de l'emplacement de cache à mappage direct, auquel les données pour l'adresse cible ont été écrites.

2. Appareil selon la revendication 1, le gestionnaire (108) de cache étant en outre configuré pour appliquer une fonction de hachage à des bits (202) de marquage pour déterminer l'emplacement de cache disponible dans l'ensemble.

3. Appareil selon la revendication 2, le gestionnaire (108) de cache étant en outre configuré pour :
générer des informations de remappage comprenant un nombre d'adresses issues d'un remappage pour chaque ensemble qui est inférieur à un nombre d'emplacements de cache dans chaque ensemble.

4. Appareil selon la revendication 1, le gestionnaire (108) de cache étant en outre configuré pour :
recevoir une demande de lecture vers une adresse de lecture dans la mémoire non volatile ; et
renvoyer les données pour l'adresse de lecture à partir d'un emplacement de cache à mappage direct pour l'adresse de lecture en réaction au fait que l'emplacement de cache à mappage direct dans la mémoire cache possède des données pour l'adresse de lecture ;
déterminer si l'adresse de lecture est indiquée dans les informations de remappage à un emplacement de cache dans la mémoire cache différent de l'emplacement de cache à mappage direct pour l'adresse de lecture en réaction au fait que l'emplacement de cache à mappage direct ne comprend pas de données pour l'adresse de lecture ; et
renvoyer des données pour l'adresse de lecture indiquée dans les informations de remappage en réaction à la détermination du fait que l'adresse de lecture est indiquée dans les informations de remappage.

5. Appareil selon la revendication 4, le gestionnaire (108) de cache étant en outre configuré pour :
déterminer si l'adresse de lecture se situe dans un emplacement parmi un ensemble d'emplacements de cache auxquels correspond l'adresse de lecture en réaction à la détermination du fait que les informations de remappage n'indiquent pas l'adresse de lecture ; et
renvoyer des données pour l'adresse de lecture à un des emplacements de cache de l'ensemble en réaction à la détermination du fait que l'adresse de lecture se situe dans un emplacement parmi l'ensemble d'emplacements de cache.

6. Appareil selon la revendication 1, le gestionnaire (108) de cache étant en outre configuré pour :
déterminer si des données dans l'emplacement de cache à mappage direct dans la mémoire cache possèdent une priorité élevée en réaction au fait que l'emplacement de cache à mappage direct conserve des données pour une autre adresse ; et
écrire les données pour l'adresse cible à l'emplacement de cache à mappage direct en réaction à la détermination du fait que les données dans l'emplacement de cache à mappage direct ne possèdent pas la priorité élevée, les données pour l'adresse cible étant écrites dans l'emplacement de cache disponible en réaction au fait que les données dans l'emplacement de cache à mappage direct possèdent la priorité élevée.

7. Appareil selon la revendication 6, des données dans la mémoire cache (108) possédant une priorité élevée ou une basse priorité en fonction d'un caractère récent d'un accès aux données, des données ayant fait l'objet d'un accès relativement plus récemment possédant la priorité élevée et des données ayant fait l'objet d'un accès relativement moins récemment ne possédant pas la priorité élevée.

8. Appareil selon la revendication 7, le gestionnaire (108) de cache étant en outre configuré pour :
traiter des emplacements de cache d'un ensemble parmi une pluralité d'ensembles d'emplacements de cache dans la mémoire cache auquel correspond l'adresse cible pour déterminer un des emplacements de cache de l'ensemble possédant la basse priorité, l'emplacement de cache disponible dans lequel les données sont écrites étant constitué de l'emplacement de cache dans l'ensemble auquel correspond l'adresse cible possédant la priorité plus basse.

9. Appareil selon l'une quelconque des revendications 1 à 8, comportant en outre :
un processeur (704) comportant un circuit intégré ; et
un contrôleur (106) de mémoire cache mis en ouvre sur les pastilles de circuit intégré du processeur, le contrôleur (106) de mémoire cache comprenant le gestionnaire (108) de cache et gérant l'accès à la mémoire cache (110) et communiquant avec la mémoire non volatile (114).

10. Procédé d'associativité de cache, comportant les étapes consistant à :
déterminer un emplacement de cache à mappage direct dans une mémoire cache (110) à partir d'une adresse cible dans une mémoire non volatile (114) ;
écrire les données pour l'adresse cible à un emplacement de cache disponible dans la mémoire cache (110) différent de l'emplacement de cache à mappage direct en réaction au fait que l'emplacement de cache à mappage direct conserve des données pour une autre adresse dans la mémoire non volatile (114) ; et
écrire les données pour l'adresse cible dans l'emplacement de cache à mappage direct en réaction au fait que l'emplacement de cache à mappage direct ne conserve pas de données pour une autre adresse dans la mémoire non volatile (114) ;
**caractérisé en ce que** :
chaque adresse provenant de la mémoire non volatile (114) correspond à un ensemble parmi une pluralité d'ensembles d'emplacements de cache dans la mémoire cache (110) ;
chaque adresse provenant de la mémoire non volatile (114) correspond à un des ensembles ;
l'emplacement de cache disponible auquel les données pour l'adresse cible sont écrites se trouve dans l'ensemble d'emplacements de cache auquel correspond l'adresse cible ; et par l'étape consistant à
indiquer dans des informations de remappage au moins une partie de l'adresse cible et l'emplacement de cache disponible dans la mémoire cache, différent de l'emplacement de cache à mappage direct, auquel les données pour l'adresse cible ont été écrites.

11. Procédé selon la revendication 10, comportant en outre l'application d'une fonction de hachage à des bits (202) de marquage pour déterminer l'emplacement de cache disponible dans l'ensemble.

12. Procédé selon la revendication 10, comportant en outre les étapes consistant à :
recevoir une demande de lecture vers une adresse de lecture dans la mémoire non volatile ; et
renvoyer les données pour l'adresse de lecture à partir d'un emplacement de cache à mappage direct pour l'adresse de lecture en réaction au fait que l'emplacement de cache à mappage direct dans la mémoire cache possède des données pour l'adresse de lecture ;
déterminer si l'adresse de lecture est indiquée dans les informations de remappage à un emplacement de cache dans la mémoire cache différent de l'emplacement de cache à mappage direct pour l'adresse de lecture en réaction au fait que l'emplacement de cache à mappage direct ne comprend pas de données pour l'adresse de lecture ; et
renvoyer des données pour l'adresse de lecture indiquée dans les informations de remappage en réaction à la détermination du fait que l'adresse de lecture est indiquée dans les informations de remappage.

13. Procédé selon la revendication 12, comportant en outre les étapes consistant à :
déterminer si l'adresse de lecture se situe dans un emplacement parmi un ensemble d'emplacements de cache auxquels correspond l'adresse de lecture en réaction à la détermination du fait que les informations de remappage n'indiquent pas l'adresse de lecture ; et
renvoyer des données pour l'adresse de lecture à un des emplacements de cache de l'ensemble en réaction à la détermination du fait que l'adresse de lecture se situe dans un emplacement parmi l'ensemble d'emplacements de cache.

14. Procédé selon la revendication 10, comportant en outre :
déterminer si des données dans l'emplacement de cache à mappage direct dans la mémoire cache possèdent une priorité élevée en réaction au fait que l'emplacement de cache à mappage direct conserve des données pour une autre adresse ; et
écrire les données pour l'adresse cible à l'emplacement de cache à mappage direct en réaction à la détermination du fait que les données dans l'emplacement de cache à mappage direct ne possèdent pas la priorité élevée, les données pour l'adresse cible étant écrites dans l'emplacement de cache disponible en réaction au fait que les données dans l'emplacement de cache à mappage direct possèdent la priorité élevée.

15. Stockage lisible par machine comprenant des instructions lisibles par machine pour amener un appareil à réaliser les étapes du procédé selon l'une quelconque des revendications 10 à 14 lorsque les instructions sont exécutées par un ordinateur.
